# EUROPEAN PATENT APPLICATION

(11) **EP 4 672 367 A1**
(43) Date of publication of application: **31.12.2025**
(21) Application number: 24854476.9
(22) Date of filing: 16.08.2024
(51) Int. Cl.: H01M 4/36, H01M 4/13, H01M 10/0562, H01M 10/052, H01M 4/02

(54) **POSITIVE ELECTRODE FOR SECONDARY BATTERY AND SECONDARY BATTERY COMPRISING SAME**

(30) Priority: 16.08.2023 KR 20230106806; 14.08.2024 KR 20240109247
(71) Applicant: LG Energy Solution, Ltd., Seoul 07335 (KR)
(72) Inventor: KIM, Myeongsoo, Daejeon 34122 (KR); KWON, Hyejin, Daejeon 34122 (KR); KIM, Sohee, Daejeon 34122 (KR); LEE, Choonghyeon, Daejeon 34122 (KR); CHOI, Seokin, Daejeon 34122 (KR); OH, Kyungbae, Daejeon 34122 (KR); KANG, Sora, Daejeon 34122 (KR)
(74) Representative: Goddar, Heinz J.
(86) International application number: PCT/KR2024/012175
(87) International publication number: WO 2025/037925

(57) **Abstract**

The present invention relates to a positive electrode for a secondary battery and a secondary battery comprising the same, and more particularly to a positive electrode for a secondary battery comprising a first positive electrode layer and a second positive electrode layer.

## Description

### [Technical Field]

This application claims the benefit of priority to Korean Patent Application No. 10-2023-0106806, filed August 16, 2023, and Korean Patent Application No. 10-2024-0109247, filed August 14, 2024, the disclosures of which are incorporated herein by reference as part of this specification.

The present invention relates to a positive electrode for a secondary battery and a secondary battery comprising the same, and more particularly to a positive electrode for a secondary battery comprising a first positive electrode layer and a second positive electrode layer.

### [Related Art]

A lithium all-solid-state battery is a battery that uses a sulfide-based, polymer-based, or oxide-based solid electrolyte and is capable of directly interconverting chemical energy into electrical energy by oxidizing or reducing lithium ions through the medium of an all-solid-state material. In particular, the benefits of eco-friendliness, safety, and high energy density capacity storage are driving demand as a sustainable secondary battery, as it can solve the limitations of currently commercialized lithium secondary batteries, which are low energy density, high cost, and toxicity.

However, all-solid-state batteries are facing problems such as irreversibility due to interfacial side reactions between the solid electrolyte and the electrode during charge and discharge reactions, and uneven distribution of electrode charge due to interfacial resistance and space-charge layer formation, which degrades the capacity of the battery. In addition, the low ionic conductivity of the all-solid-state material itself has hindered the commercialization of lithium all-solid-state batteries, the next generation of batteries.

To address these issues, electrode active material composites including a protective layer between the solid electrolyte and the electrode active material have been developed. However, although the interfacial side reactions between the solid electrolyte and the electrode active material are reduced due to the thin coating of the protective layer, the protective layer itself is a resistor, resulting in resistance deviation as the loading within the electrode increases.

Therefore, research is needed on positive electrode active material composites that suppress interfacial side reactions between solid electrolyte and electrode active material, reduce resistance, and thus improve charge and discharge performance and capacity retention.

### [Prior Art Reference]

### [Patent Reference]

(Patent Reference 1) Korean Laid-open Patent Publication No. 10-2022-0042726

### [Detailed Description of the Invention]

### [Technical Problem]

Accordingly, it is an object of the present invention to provide a positive electrode for an all-solid-state battery by controlling the content of a coating layer of a positive electrode active material, thereby reducing a resistance deviation caused by a higher loading in the positive electrode layer, and preventing a side reaction between the solid electrolyte and the positive electrode active material, thereby improving the life of the battery.

### [Technical Solution]

To resolve the issues described above, one example of the present invention provides a positive electrode for a secondary battery wherein the positive electrode includes a first positive electrode layer and a second positive electrode layer, wherein the first positive electrode layer includes a first positive electrode active material and a first coating layer coating a surface of the first positive electrode active material, and wherein the second positive electrode layer includes a second positive electrode active material and a second coating layer coating a surface of the second positive electrode active material, wherein a content of the first coating layer is less than 1% by weight, based on a total weight of the first positive electrode active material, and wherein a content of the second coating layer is 1% by weight or more, based on a total weight of the second positive electrode active material.

In one example of the present invention, there is provided a positive electrode for a secondary battery disposed between the current collector and a solid electrolyte, wherein the first positive electrode layer abuts one side of the current collector and the second positive electrode layer abuts one side of the solid electrolyte.

In one example of the present invention, the present invention provides a positive electrode for a secondary battery, wherein the thickness ratio of the first positive electrode layer (Tₐ) and the second positive electrode layer (T_{b}) is 20 to 69:31 to 80.

In one example of the present invention, the present invention provides a positive electrode for a secondary battery, wherein the thickness ratio of the first positive electrode layer (Tₐ) and the second positive electrode layer (T_{b}) is 20 to 50:50 to 80.

In one example of the present invention, the present invention provides a positive electrode for a secondary battery, wherein the first coating layer and the second coating layer comprise lithium oxide.

In one example of the present invention, the present invention provides a positive electrode for a secondary battery, wherein the lithium oxide is any one selected from the group consisting of Li₄Ti₅O₁₂, LiNbO₃, LiTaO₃, LiCoO₂, Li₃BO₃, Li₂ZrO₃, Li₃PO₄, Li₄SiO₄ and Li₂WO₄.

In one example of the present invention, the present invention provides a positive electrode for a secondary battery, wherein the solid electrolyte is a sulfide-based, polymer-based, oxide-based, or halide-based solid electrolyte.

In one example of the present invention, the present invention provides a positive electrode for a secondary battery, wherein the secondary battery is an all-solid-state battery.

In one example of the present invention, the present invention provides an all-solid-state lithium secondary battery comprising a positive electrode; a negative electrode; and a solid electrolyte disposed between the positive electrode and negative electrode.

### [Advantageous Effects]

By including a first positive electrode layer and a second positive electrode layer having a certain proportion of thickness, and including a certain content of a coating layer of a positive electrode active material in the first and second positive electrode layers, the present invention has the effect of suppressing the side reaction between the solid electrolyte and the electrode layer, reducing the resistance in the positive electrode, and thus improving the performance of the battery.

### [Brief Description of Drawing]

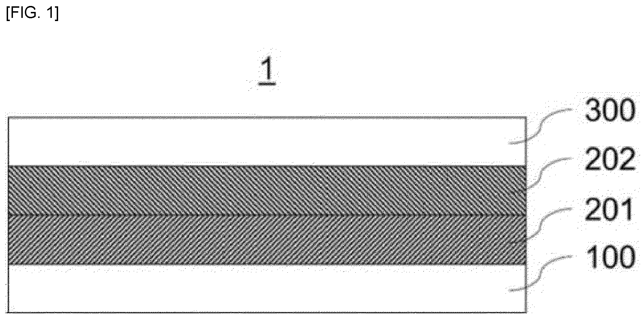

FIG. 1 is a schematic diagram of a positive electrode according to one example of the present invention.

### [Best Mode]

The present invention is subject to various modifications and may have many examples, certain examples of which will be described in detail in the following description.

However, this is not intended to limit the invention to any particular example, and is to be understood to include all modifications, equivalents, or substitutions that fall within the scope of the idea and skill of the present invention.

In the present invention, the terms "comprising" and "having" are intended to designate the presence of the features, numbers, steps, actions, components, parts, or combinations thereof described in the specification, and are not to be understood as precluding the possibility of the presence or addition of one or more other features, numbers, steps, actions, components, parts, or combinations thereof.

All-solid-state batteries have the problem that the capacity of the battery is reduced due to interfacial resistance caused by interfacial side reactions between the solid electrolyte and the electrode during charge and discharge reactions. To solve these problems, electrode active material composites that include a protective layer between the solid electrolyte and the electrode active material are being developed, but the protective layer itself is a resistor, causing resistance deviation as the loading in the electrode increases.

Therefore, the electrode is fine at low loading, but at high loading of 5 mAh/cm² or more, the resistance deviation increases along the thickness direction within the electrode, causing the electrode active material with relatively low resistance to participate in charging and discharging. In other words, the positive electrode active material in contact with one side of the solid electrolyte has a lower resistance than the positive electrode active material in contact with one side of the current collector, so only the positive electrode active material in contact with one side of the solid electrolyte is mainly involved in charge and discharge. However, if only a small portion of the positive electrode active material within the positive electrode is involved in the charging and discharging of the battery, the battery performance degrades rapidly over multiple cycles.

To improve the performance of the battery, the inventors of the present invention have completed the invention by controlling the thickness of the positive electrode layer and the content of the coating layer of the positive electrode active material so that the positive electrode active material disposed in the positive electrode participates in charging and discharging uniformly throughout.

Hereinafter, the composition and effectiveness of the present invention will be described in detail.

In one example of the present invention, a positive electrode for an all-solid-state battery includes a first positive electrode layer and a second positive electrode layer, wherein the first positive electrode layer includes a first positive electrode active material and a first coating layer coating a surface of the first positive electrode active material, and wherein the second positive electrode layer includes a second positive electrode active material and a second coating layer coating a surface of the second positive electrode active material, wherein a content of the first coating layer is less than 1% by weight, based on a total weight of the first positive electrode active material, and wherein a content of the second coating layer is 1% by weight or more, based on a total weight of the second positive electrode active material.

FIG. 1 is a schematic diagram of a positive electrode according to one example of the present invention.

Referring to FIG. 1, the positive electrode (1) may include a first positive electrode layer (201) and a second positive electrode layer (202). Furthermore, the positive electrode (1) may be disposed between the current collector (100) and the solid electrolyte (300). Here, the first positive electrode layer (201) may be in contact with one side of the current collector (100), and the second positive electrode layer (202) may be in contact with one side of the solid electrolyte (300).

The first positive electrode layer may include a first positive electrode active material and a first coating layer coating a surface of the first positive electrode active material.

The second positive electrode layer may include a second positive electrode active material and a second coating layer coating a surface of the second positive electrode active material.

Here, the first positive electrode active material and the second positive electrode active material may comprise a lithium metal oxide represented by Formula 1 below:

[Formula 1] Liₓ[Ni_{y}Co_{z}Mn_{w}M¹ᵥ]Oᵤ

wherein M¹ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo; and
x, y, z, w, v, and u are 1.0≤x≤1.30, 0.1≤y<0.95, 0.01<z≤0.5, 0.01<w≤0.5, 0≤v≤0.2, and 1.5≤u≤4.5, respectively.

The lithium metal oxide represented by Formula 1 above is an oxide containing a transition metal together with lithium, which may comprise a high content of nickel among the transition metal. In one example, the lithium metal oxide may comprise at least one selected from the group consisting of LiNi_{0.9}Co_{0.05}Mn_{0.05}O₂, LiNi_{0.8}Co_{0.1}Mn_{0.1}O₂, LiNi_{0.7}Co_{0.15}Mn_{0.15}O₂, LiNi_{0.6}Co_{0.2}Mn_{0.2}O₂, LiNi_{0.6}Co_{0.2}Mn_{0.1}Al_{0.1}O₂, LiNi_{0.7}Co_{0.1}Mn_{0.1}Al_{0.1}O₂, and LiNi_{0.8}Co_{0.1}Mn_{0.05}Al_{0.05}O₂. The lithium metal oxide contains a high content of nickel, which has a good effect on improving the charge and discharge capacity of the battery.

The first coating layer may be fully or partially coated on a surface of the first positive electrode active material particle.

The content of the first coating layer may be less than 1% by weight, based on the total weight of the first positive electrode active material. Specifically, the content of the first coating layer may be 0.9% by weight or less, 0.8% by weight or less, 0.7% by weight or less, 0.6% by weight or less, 0.5% by weight or less, 0.4% by weight or less, 0.3% by weight or less, 0.2% by weight or less, 0.1% by weight or less, based on the total weight of the first positive electrode active material, but is not limited thereto.

The first coating layer may be coated at a content of less than 1.0% by weight on a surface of the first positive electrode active material abutting one side of the current collector, thereby reducing the resistance of the electrode and thereby improving the performance of the battery.

When the content of the first coating layer includes 1.0% by weight or more, there is a problem that the resistance deviation becomes large in a high-loading electrode of 5 mAh/cm² or more, resulting in a decrease in the initial capacity and efficiency of the electrode, and a decrease in the capacity retention rate.

The thickness of the first coating layer may be 10 nm to 40 nm. Specifically, the average thickness of the first coating layer may be 20 nm when the content of the first coating layer is 0.5% by weight based on the total weight of the first positive electrode active material.

The second coating layer may be fully or partially coated on a surface of the second positive electrode active material particle.

The content of the second coating layer may be at least 1% by weight, based on the total weight of the second positive electrode active material. Specifically, the content of the second coating layer may be 1.0% or more, 1.1% or more, 1.2% or more, 1.3% or more, 1.4% or more, 1.5% or more, 1.6% or more, 1.7% or more, 1.8% or more, 1.9% or more, 2.0% or more, based on the total weight of the second positive electrode active material, but is not limited thereto.

The second coating layer is coated on a surface of the second positive electrode active material abutting one side of the solid electrolyte in an amount of 1.0% by weight or more, so as to inhibit the side reaction between the solid electrolyte and the positive electrode, thereby improving the performance of the battery.

If the content of the second coating layer is less than 1.0% by weight, side reactions between the solid electrolyte and the positive electrode layer occur, resulting in a decrease in battery performance.

The thickness of the second coating layer may be 40 nm to 100 nm. Specifically, when the content of the second coating layer is 1.0% by weight based on the total weight of the second positive electrode active material, the average thickness of the second coating layer may be 40 nm, and when the content of the second coating layer is 1.5% by weight based on the total weight of the second positive electrode active material, the average thickness of the second coating layer may be 60 nm.

The ratio of the thickness (Tₐ) of the first positive electrode layer and the thickness (T_{b}) of the second positive electrode layer may be in the range of 20 to 69 : 31 to 80. More specifically, the ratio of the thickness of the first positive electrode layer (Tₐ) to the thickness of the second positive electrode layer (T_{b}) may be 20:80, 25:75, 30:70, 35:75, 40:60, 45:55, 50:50, 55:45, 60:40, 65:35, but is not limited thereto.

The ratio of the thickness (Tₐ) of the first positive electrode layer and the thickness (T_{b}) of the second positive electrode layer may be in the range of 20 to 50 : 50 to 80. Since the thickness (Tₐ) of the first positive electrode layer is equal to or smaller than the thickness (T_{b}) of the second positive electrode layer, the resistance deviation between the first positive electrode active material comprised in the first positive electrode layer contacting one side of the current collector and the second positive electrode active material comprised in the second positive electrode layer contacting one side of the solid electrolyte can be reduced. This ensures that the positive electrode active material placed within the positive electrode participates in charging and discharging uniformly throughout.

If the ratio of the thickness (Tₐ) of the first positive electrode layer and the thickness (T_{b}) of the second positive electrode layer falls outside the above range, for example, if the ratio of the thickness (Tₐ) of the first positive electrode layer and the thickness (T_{b}) of the second positive electrode layer is 70:30 or 10:90, there is a problem that the initial capacity and efficiency of the electrode are reduced, and the capacity retention rate is rapidly reduced, resulting in a decrease in the life of the battery.

The first coating layer and the second coating layer may be of the same composition, but may have different contents. The first coating layer and the second coating layer may comprise lithium oxide. The lithium oxide may be any one selected from the group consisting of Li₄Ti₅O₁₂, LiNbO₃, LiTaO₃, LiCoO₂, Li₃BO₃, Li₂ZrO₃, Li₃PO₄, Li₄SiO₄ and Li₂WO₄.

The first positive electrode layer and the second positive electrode layer may comprise the same composition of positive electrode active material, solid electrolyte, conductive material, and binder, and the contents of the first coating layer and the second coating layer may be different.

The solid electrolyte may comprise at least one selected from the group consisting of a sulfide-based solid electrolyte, a polymer-based solid electrolyte, an oxide-based solid electrolyte and a halide-based solid electrolyte, and preferably a sulfide-based solid electrolyte. The solid electrolyte may be in the form of particles.

The sulfide-based solid electrolyte contains sulfur (S) and exhibits ionic conductivity of a metal belonging to Group 1 or 2 of the periodic table, and it may include a Li-P-S-based glass or a Li-P-S-based glass-ceramic.

Specifically, the sulfide-based solid electrolyte may include at least one selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, and preferably include at least one selected from the group consisting of Li₆PS₅Cl, Li₆PS₅Br and Li₆PS₅I. The Li₆PS₅Cl, Li₆PS₅Br and Li₆PS₅I may be argyrodite type solid electrolytes. Furthermore, the sulfide-based solid electrolyte may be doped with trace elements, for example, Li₆PS₅Cl additionally doped with bromine (Br).

The polymeric solid electrolyte is a composite of a lithium salt and a polymeric resin, that is, a polymeric electrolyte material in the form formed by the addition of a polymeric resin to a solvated lithium salt, and may exhibit an ionic conductivity of about 1x10⁻⁷ S/cm or more, preferably about 1x10⁻⁵ S/cm or more.

Non-limiting examples of the polymeric resin include polyether-based polymers, polycarbonate-based polymers, acrylate-based polymers, polysiloxane-based polymers, phosphazene-based polymers, polyethylene derivatives, alkylene oxide derivatives such as polyethylene oxide, phosphate ester polymers, poly agitation lysines, polyester sulfides, polyvinyl alcohols, polyvinylidene fluorides, and polymers comprising ionic dissociating groups, and may include one or more thereof. Furthermore, the polymeric electrolyte may be a polymeric resin, for example, a branched copolymer, a comb-like polymer, and a cross-linked polymeric resin copolymerized with an amorphous polymer such as PMMA, polycarbonate, polysiloxane (PDMS), and/or phosphazene as a comonomer in a poly ethylene oxide (PEO) main chain, and may include one or more thereof.

In the electrolyte of the present invention, the lithium salt is an ionizable lithium salt, which can be expressed as Li⁺X⁻. The anions of the lithium salts are not specifically limited, but may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The oxide-based solid electrolyte may comprise oxygen (O) and have the ionic conductivity of a metal belonging to Group 1 or 2 of the periodic table. For example, it may include at least one selected from LLTO-based compounds, Li₆La₂CaTa₂O₁₂, Li₆La₂ANb₂O₁₂ (wherein A is Ca or Sr), Li₂Nd₃TeSbO₁₂, Li₃BO_{2.5}N_{0.5}, Li₉SiAlO₈, LAGP-based compounds, LATP-based compounds, Li1₊ₓTi₂₋ₓAlₓSi_{y}(PO₄)_{3-y} (wherein 0≤x≤1, and 0≤y≤1), LiAlₓZr₂₋ₓ(PO₄)₃ (wherein 0≤x≤1, and 0≤y≤1), LiTiₓZr₂₋ₓ(PO₄)₃ (wherein 0≤x≤1, and 0≤y≤1), LISICON-based compounds, LIPON-based compounds, perovskite-based compounds, nasicon-based compounds, and LLZO-based compounds.

The halide-based solid electrolyte (Li-M-X) comprises a halogen element (X) and a metal element (M), wherein the metal element (M) is a metal or semi-metal having a divalent, trivalent, or quaternary oxide number. For example, M is a metal element, which may be selected from the group consisting of Y, Sc, Cr, Mn, Fe, Co, Ni, Al, Ga, As, Sb, Bi, Mg, Ca, Zn, Cd, Tb, Dy, Ho, Er, Tm, and Yb, and X is a halogen element, which may be F, C1, or Br. Specifically, the halide-based solid electrolyte may be, but is not limited to, Li₃YCl₆, or Li₃YBr₆.

The lithium secondary battery according to the present invention, including the positive electrode of the present invention described above, can exhibit excellent battery performance by suppressing side reactions occurring at the interface of the positive electrode active material and the solid electrolyte, and reducing resistance in the positive electrode.

In this case, the positive electrode may have a structure in which a positive electrode composite layer containing the positive electrode active material of the present invention described above is formed on the positive electrode current collector.

The positive electrode current collector is not particularly limited as long as it is conductive without causing chemical changes in the battery, for example, stainless steel, aluminum, nickel, titanium, calcined carbon, aluminum or stainless steel whose surface is treated with carbon, nickel, titan or silver can be used.

Further, the positive electrode composite layer may comprise a positive electrode active material, a conductive material, a binder, and a solid electrolyte, and in some cases further comprise an additive.

Furthermore, the conductive material is not particularly limited, as long as it is conductive without causing chemical changes in the battery, but specifically, graphite, carbon-based materials, metal powders or metal fibers, acicular or branched conductive whiskers, conductive metal oxides, conductive polymers, and any one or mixtures thereof may be used. More specifically, graphite, such as natural or artificial graphite; carbon-based materials, such as carbon black, acetylene black, ketjen black, channel black, furnace black, lamp black, summer black, and carbon fiber; metal powders or metal fibers, such as copper, nickel, aluminum, and silver; Conductive whiskers, either acicular or branched, such as zinc oxide whisker, calcium carbonate whisker, titanium dioxide whisker, silicon oxide whisker, silicon carbide whisker, aluminum borate whisker, magnesium borate whisker, potassium titanate whisker, silicon nitride whisker, silicon carbide whisker, and alumina whisker; a conductive metal oxide, such as titanium oxide, or a conductive polymer, such as a polyphenylene derivative, or the like, any one of which or a mixture of two or more of which may be used.

Further, the binder for the positive electrode is any one or a mixture of two or more selected from the group consisting of N,N-bis[3-(triethoxysilyl)propyl]urea, polyethylene oxide (PEO), poly(vinylidene fluoride) (PVDF), and poly(vinylidene fluoride-co-hexafluoropropylene) (PVDF-co-HFP), or any one or a mixture of two or more selected from the group consisting of N,N-bis[3-(triethoxysilyl)propyl]urea, polyethylene oxide (PEO), poly(vinylidene fluoride) (PVDF), poly(vinylidene fluoride-co-hexafluoropropylene) (PVDF-co-HFP), conjugated diene rubber latexes such as acrylonitrile styrene butadiene rubber (SBR), acrylonitrile butadiene rubber (NBR), methacrylate methyl butadiene rubber (MBR), or butadiene rubber (BR), carboxymethylcellulose (CMC), starch, hydroxypropylcellulose, regenerated cellulose, polyvinylpyrrolidone, polytetrafluoroethylene (PTFE), polyethylene, polypropylene, ethylene-propylene-diene terpolymer (EPDM), sulfonated EPDM, styrene-butadiene rubber, fluorinated rubber, and various copolymers.

Furthermore, the negative electrode may have a structure in which a negative electrode composite layer containing a negative electrode active material is formed on the negative electrode current collector.

The negative electrode current collector is not particularly limited as long as it has a high conductivity without causing chemical changes in the battery, and may include, for example, stainless steel, copper, nickel, titanium, calcined carbon, or stainless steel whose surface is treated with carbon, nickel, titanium, or silver.

The negative electrode composite layer may further comprise a negative electrode active material, a conductive material, a binder, and a solid electrolyte, and in some cases, an additive.

In this case, the negative electrode active material may be one selected from the group consisting of lithium metal, lithium alloy, lithium metal composite oxide, lithium-containing titanium composite oxide (LTO), and combinations thereof. Here, the lithium alloy can be an alloy comprising lithium and at least one metal selected from Na, K, Rb, Cs, Fr, Be, Mg, Ca, Sr, Ba, Ra, Al, and Sn. Further, the lithium metal complex oxide may be any one metal (Me) oxide (MeOx) selected from the group consisting of lithium and Si, Sn, Zn, Mg, Cd, Ce, Ni, and Fe, and may be, for example, LiₓFe₂O₃ (wherein 0<x≤1) or LiₓWO₂ (wherein 0<x≤1).

In addition, the negative electrode active material may be a metal complex oxide such as SnₓMe₁₋ₓMe'_{y}O_{z} (wherein Me is Mn, Fe, Pb, or Ge; Me' is Al, B, P, Si, elements of Group 1, 2 or 3 of the periodic table, or halogen; 0<x≤1; 1≤y≤3; and 1≤z≤8); oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ or Bi₂O₅, and carbon-based negative electrode active materials such as crystalline carbon, amorphous carbon, or carbon composites can be used alone or in combination of two or more.

Furthermore, the conductive material may include, for example, nickel powder, cobalt oxide, titanium oxide, carbon, and the like. The carbon can be any one or more selected from the group consisting of ketjen black, acetylene black, furnace black, graphite, carbon fiber, and flourene.

Further, the binder for the negative electrode is any one or a mixture of two or more selected from the group consisting of N,N-bis[3-(triethoxysilyl)propyl]urea, polyethylene oxide (PEO), poly(vinylidene fluoride) (PVDF), and poly(vinylidene fluoride-co-hexafluoropropylene) (PVDF-co-HFP), or any one or a mixture of two or more selected from the group consisting of N,N-bis[3-(triethoxysilyl)propyl]urea, polyethylene oxide (PEO), poly(vinylidene fluoride) (PVDF), poly(vinylidene fluoride-co-hexafluoropropylene) (PVDF-co-HFP), conjugated diene rubber latexes such as styrene butadiene rubber (SBR), acrylonitrile butadiene rubber (NBR), methacrylate methyl butadiene rubber (MBR), or butadiene rubber (BR), carboxymethylcellulose (CMC), starch, hydroxypropylcellulose, regenerated cellulose, polyvinylpyrrolidone, polytetrafluoroethylene, polyethylene, polypropylene, ethylene-propylene-diene terpolymer (EPDM), sulfonated EPDM, styrene-butadiene rubber, fluorinated rubber, and various copolymers.

### [Mode for Practicing the Invention]

Hereinafter, the present invention will be described in more detail by examples and experimental examples.

However, the following examples and experimental examples are illustrative of the present invention, and the present invention is not limited to these examples.

### Example 1

### (1) Preparing a positive electrode active material

Li₂CO₃ and Ni_{0.8}Co_{0.1}Mn_{0.1}(OH)₂ were mixed in a weight ratio of 1.1:1 to form a reaction mixture, and the reaction mixture was placed in a crucible made of stainless steel and subjected to a first heat treatment at 600°C, ambient atmosphere for 5 hours to form a plasticized mixture, and then cooled. Subsequently, it was quenched, sieved, and the crushed plasticized mixture was placed in an aluminum crucible and subjected to a second heat treatment at 800°C, ambient atmosphere for 10 hours to prepare a positive electrode active material parent material with a particle diameter (D50) of 5 µm.

Next, titanium (IV) isopropoxide and lithium ethoxide were added in stoichiometric proportions as precursors of lithium titanate to form a protective layer, and dissolved in ethanol to prepare a Li₄Ti₅O₁₂ solution, and the positive electrode active material prepared above was added to the Li₄Ti₅O₁₂ solution to prepare a mixed solution. The mixed solution was mixed for 24 hours using a lab blender (Waring), vacuum dried to remove the solvent, ethanol, placed in a tube furnace with an inner diameter of 50 mm and a length of 1,000 mm, and heat treated at 400°C for 4 hours, to prepare the first active material composite comprising Li₄Ti₅O₁₂ in an amount of 0.3 parts by weight based on the total weight of the positive electrode active material.

Furthermore, the second active material composite was prepared by the same method as the first active material composite above, except that Li₄Ti₅O₁₂ was included in an amount of 1.2 parts by weight based on the total positive electrode active material.

### (2) Preparing an electrode

81.9% by weight of the first active material composite prepared in (1) above, 15.6% by weight of solid electrolyte LPS, 1.5% by weight of carbon black powder, and 1% by weight of PTFE as a binder were mixed using a lab blender (Waring) for 1 min at 5000 rpm without solvent (primary mixing). Then, high shear mixing (PBV-0.1 L, Irie Shokai) was performed by applying a shear force of 100 N to the mixture to prepare dough (secondary mixing). Next, the dough was used to prepare the first positive electrode layer of the free-standing structure using a two-roll mill (MR-3, Inoue).

The second positive electrode layer was prepared in the same manner as the preparation of electrode layer A above, except that it included the second active material composite prepared in (1) above.

The positive electrode was prepared by placing a free-standing film on one side of an aluminum current collector with a thickness of 15 µm so that the thickness ratio of the first positive electrode layer and the second positive electrode layer was 30:70, and pressurizing it.

### Example 2

The positive electrode was prepared by the same method as described in Example 1 above, except that the thickness ratio of the first and second positive electrode layers was 50:50.

### Example 3

The positive electrode was prepared by the same method as described in Example 1 above, except that a first active material composite comprising Li₄Ti₅O₁₂ in an amount of 0.9 parts by weight based on the total positive electrode active material was prepared.

### Example 4

The positive electrode was prepared by the same method as described in Example 1 above, except that a second active material composite containing Li₄Ti₅O₁₂ in an amount of 0.9 parts by weight based on the total positive electrode active material was prepared.

### Example 5

The positive electrode was prepared by the same method as described in Example 1 above, except that niobium (V) ethoxide was used as a precursor for lithium niobium oxide instead of lithium titanate.

### Example 6

The positive electrode was prepared by the same method as described in Example 1 above, except that tantalum (V) ethoxide was used as a precursor to lithium tantalum oxide instead of lithium titanate.

### Comparative Example 1

The positive electrode was prepared by the same method as described in Example 1 above, except that the thickness ratio of the first and second positive electrode layers was 70:30.

### Comparative Example 2

The positive electrode was prepared by the same method as described in Example 1 above, except that the thickness ratio of the first and second positive electrode layers was 10:90.

### Comparative Example 3

The positive electrode was prepared by the same method as described in Example 1 above, except that the first active material composite containing Li₄Ti₅O₁₂ was prepared in an amount of 1.2 parts by weight relative to the total weight of the positive electrode active material.

### Comparative Example 4

The positive electrode was prepared by the same method as described in Example 1 above, except that a second active material composite containing Li₄Ti₅O₁₂ in an amount of 0.3 parts by weight based on the total positive electrode active material was prepared.

### Comparative Example 5

The positive electrodes were prepared by the same method as described in Example 1 above, except that a first active material composite comprising Li₄Ti₅O₁₂ in an amount of 0.7 parts by weight based on the total weight of the positive electrode active material and a second active material complex comprising Li₄Ti₅O₁₂ in an amount of 0.7 parts by weight based on the total weight of the positive electrode active material were prepared.

Table 1 below shows the material and content of the coating layer of the active material composite and the thickness ratio of the positive electrode layer prepared in Examples 1 to 6 and Comparative Examples 1 to 5.

**[Table 1]**

| | Coating layer material | First positive electrode layer | Second positive electrode layer | Thickness ratio of first positive electrode layer to second positive electrode layer |
|---|---|---|---|---|
| | | Content of first coating layer (weight%) | Content of second coating layer (weight%) | |
| Example 1 | Li₄Ti₅O₁₂ | 0.3 | 1.2 | 30:70 |
| Example 2 | Li₄Ti₅O₁₂ | 0.3 | 1.2 | 50:50 |
| Example 3 | Li₄Ti₅O₁₂ | 0.9 | 1.2 | 30:70 |
| Example 4 | Li₄Ti₅O₁₂ | 0.3 | 1.0 | 30:70 |
| Example 5 | LiNbO₃ | 0.3 | 1.2 | 30:70 |
| Example 6 | LiTaO₃ | 0.3 | 1.2 | 30:70 |
| Comparative Example 1 | Li₄Ti₅O₁₂ | 0.3 | 1.2 | 70:30 |
| Comparative Example 2 | Li₄Ti₅O₁₂ | 0.3 | 1.2 | 10:90 |
| Comparative Example 3 | Li₄Ti₅O₁₂ | 1.2 | 1.2 | 30:70 |
| Comparative Example 4 | Li₄Ti₅O₁₂ | 0.3 | 0.3 | 30:70 |
| Comparative Example 5 | Li₄Ti₅O₁₂ | 0.7 | 0.7 | 30:70 |

### Experimental Example 1: Evaluating initial discharge capacity and efficiency

Lithium metal with a thickness of 40 µm was used as the negative electrode, and a Li6PS5Cl solid electrolyte film with a thickness of 50 µm was interposed between the positive electrode and the negative electrode prepared in Examples 1 to 6 and Comparative Examples 1 to 5, and pressurized at a pressure of 500 MPa, and the cell was manufactured in the form of a jig cell with a capacity of 5 mAh/cm2 with a driving pressure of 3 MPa for cell evaluation.

It was charged at a rate (C-rate) of 0.1 C until the voltage reached 4.25 V (vs. Li) and then cut-off at a rate of 0.05 C while maintaining 4.25 V (vs. Li). It was then discharged at a rate (C-rate) of 0.1 C until the voltage at discharge was 3.0 V (vs. Li) (1^{st} cycle). The initial efficiency was calculated using discharge capacity/charge capacity x 100 (%).

Table 2 below shows the results of the initial capacity and initial efficiency.

**[Table 2]**

| | Initial capacity at 0.1 C (mAh) | Initial Efficiency at 0.1 C (%) |
|---|---|---|
| Example 1 | 5.0 | 94.0 |
| Example 2 | 5.0 | 94.2 |
| Example 3 | 5.0 | 93.9 |
| Example 4 | 5.1 | 93.7 |
| Example 5 | 5.0 | 94.1 |
| Example 6 | 5.0 | 93.7 |
| Comparative Example 1 | 4.5 | 88.1 |
| Comparative Example 2 | 4.7 | 93.4 |
| Comparative Example 3 | 4.2 | 92.8 |
| Comparative Example 4 | 4.3 | 85.2 |
| Comparative Example 5 | 4.5 | 90.1 |

### Experimental Example 2: Evaluating the lifetime characteristics of a battery

It was charged at a C-rate of 0.33 C until the voltage reached 4.25 V (vs. Li), then cut-off at a rate of 0.1 C while maintaining 4.25 V (vs. Li). It was then discharged at a rate (C-rate) of 0.33 C until the voltage at discharge was 3.0 V (vs. Li) (1^{st} cycle). The above charge and discharge test was repeated for 50 cycles to measure the capacity retention of the discharge capacity. Table 3 below shows the capacity retention rates measured above.

**[Table 3]**

| | Capacity retention (%) |
|---|---|
| Example 1 | 90.2 |
| Example 2 | 88.4 |
| Example 3 | 94.8 |
| Example 4 | 87.9 |
| Example 5 | 90.9 |
| Example 6 | 89.0 |
| Comparative Example 1 | 54.0 |
| Comparative Example 2 | 68.2 |
| Comparative Example 3 | 72.9 |
| Comparative Example 4 | 42.1 |
| Comparative Example 5 | 58.3 |

As shown in Tables 2 and 3 above, the batteries according to Examples 1 to 6 comprise a positive electrode active material composite, wherein the content of the first coating layer is less than 1% by weight of the total weight of the first positive electrode active material, the content of the second coating layer is at least 1% by weight of the total weight of the second positive electrode active material, and the thickness ratio of the first positive electrode layer and the second positive electrode layer is 20 to 69:31 to 80, and it was found that the batteries have excellent initial capacity and efficiency, and significantly better lifetime characteristics. On the other hand, the batteries according to Comparative Examples 1 and 2, wherein the thickness ratio between the first and second positive electrode layers exceeded the range of 20 to 69:31 to 80, showed a significant decrease in capacity retention.

It has also been found that the batteries according to comparative Examples 3 to 5 comprise a positive electrode active material composite, wherein the content of the first coating layer is greater than 1% by weight of the total weight of the first positive electrode active material, or wherein the content of the second coating layer is less than 1% by weight of the total weight of the second positive electrode active material, resulting in a decrease in the initial capacity and efficiency of the battery, and a significant decrease in its lifetime characteristics.

### [Reference Numerals]

1: Positive electrode
100: Positive electrode current collector
201: First positive electrode layer
202: Second positive electrode layer
300: Solid electrolyte

## Claims

1. A positive electrode for a secondary battery,
wherein the positive electrode includes a first positive electrode layer and a second positive electrode layer,
wherein the first positive electrode layer includes a first positive electrode active material and a first coating layer coating a surface of the first positive electrode active material,
wherein the second positive electrode layer includes a second positive electrode active material and a second coating layer coating a surface of the second positive electrode active material,
wherein the content of the first coating layer is less than 1% by weight, based on the total weight of the first positive electrode active material,
wherein the content of the second coating layer is at least 1% by weight, based on the total weight of the second positive electrode active material.

2. The positive electrode for a secondary battery according to claim 1,
wherein the positive electrode is disposed between the current collector and the solid electrolyte,
wherein the first positive electrode layer is in contact with one side the current collector and the second positive electrode layer is in contact with one side of the solid electrolyte.

3. The positive electrode for a secondary battery according to claim 1,
wherein the first positive electrode layer (Tₐ) and the second positive electrode layer (T_{b}) have a thickness ratio of 20 to 69:31 to 80.

4. The positive electrode for a secondary battery according to claim 3,
wherein the first positive electrode layer (Tₐ) and the second positive electrode layer (T_{b}) have a thickness ratio of 20 to 50:50 to 80.

5. The positive electrode for a secondary battery according to claim 1,
wherein the first coating layer and the second coating layer comprise lithium oxide.

6. The positive electrode for a secondary battery according to claim 5,
wherein the lithium oxide is any one selected from the group consisting of Li₄Ti₅O₁₂, LiNbO₃, LiTaO₃, LiCoO₂, Li₃BO₃, Li₂ZrO₃, Li₃PO₄, Li₄SiO₄ and Li₂WO₄.

7. The positive electrode for a secondary battery according to claim 2,
wherein the solid electrolyte is a sulfide-based, polymer-based, oxide-based, or halide-based solid electrolyte.

8. The positive electrode for a secondary battery according to claim 1,
wherein the secondary battery is an all-solid-state battery.

9. An all-solid-state lithium secondary battery, comprising a positive electrode according to any one of claims 1 to 8;
a negative electrode; and
a solid electrolyte disposed between the positive electrode and negative electrode.
